# EUROPEAN PATENT SPECIFICATION

(11) **EP 2 854 372 B1**
(45) Date of publication and mention of the grant of the patent: **07.11.2018**
(21) Application number: 13851024.3
(22) Date of filing: 24.09.2013
(51) Int. Cl.: H04L 29/08

(54) **METHOD AND DEVICE FOR DISPLAYING PUSHED INFORMATION**
VERFAHREN UND VORRICHTUNG ZUR ANZEIGE VON PUSH-INFORMATIONEN
PROCÉDÉ ET DISPOSITIF D'AFFICHAGE D'INFORMATIONS POUSSÉES

(30) Priority: 31.10.2012 CN 201210429458
(43) Date of publication of application: 01.04.2015
(73) Proprietor: Xiaomi Inc., Beijing 100085 (CN)
(72) Inventor: WANG, Bin, Beijing100085 (CN); LIU, Daokuan, Beijing 100085 (CN); WANG, Xuanran, Beijing 100085 (CN); WU, Tingbin, Beijing 100085 (CN); OU, Jinliang, Beijing 100085 (CN)
(74) Representative: Hanna Moore + Curley
(86) International application number: PCT/CN2013/084111
(87) International publication number: WO 2014/067372

(56) References cited:
- EP-A2- 2 498 216
- WO-A2-2012/135684
- CN-A- 1 972 253
- CN-A- 101 043 348
- CN-A- 102 970 343
- US-A1- 2008 059 571
- US-A1- 2008 306 824

## Description

### TECHNICAL FIELD

The present disclosure relates to a communication technology field, and more particularly to a method and a device for displaying a push message.

### BACKGROUND

With a rapid development of network and a prevalence of networkable terminal products, the networkable terminal products are more and more widely used to acquire abundant information. For example, news information may be acquired by visiting a website via a browser, and weather information may be acquired from network side via a dedicated client application.

Accordingly, when intending to browse different kinds of information using a terminal, a user has to trigger a corresponding application in the terminal. Thus, tedious operations are required to perform if the user wants to acquire plenty different kinds of information.

Aiming at the above problem, if various kinds of information may be automatically pushed to the terminal, user operations will be simplified. However, there isn't any area on the terminal for displaying such push message therein.

US2008/0059571A1 discloses a system for displaying intermediate message content over the unused area of a web browser.

US2008/0306824A1 discloses an empty space advertising engine.

EP2498216A2 discloses method and system for displaying an advertisement in an idle space upon the notification of the arrival of a received message.

### SUMMARY

The invention is related to a method according to claim 1, a device according to claim 7, a computer program according to claim 14 and a computer usable medium according to claim 15. Further embodiments of the invention are defined by the dependent claims.

Other features and advantages of the present disclosure will be illustrated in the description hereinafter, and may become in part apparent from the description, or may be learned through the implementation of the present disclosure. The objects and other advantages of the present disclosure may be achieved and obtained by specific structures listed in the description, the claims, and the appending drawings.

It should be understood that the descriptions above in general and hereinafter in detail are only for illustrative but not to limit the present disclosure.

Further detailed descriptions of the present disclosure will be illustrated with reference to the appending drawings and the embodiments.

### BRIEF DESCRIPTION OF THE DRAWINGS

The appending drawings are used to provide further illustration of the present disclosure, and constitute a part of the description, rather than limiting the present disclosure, wherein,
Fig.1 is an illustrative flow chart of a method for displaying a push message according to the present disclosure;
Fig.2 is an illustrative flow chart of a method for displaying a push message according to an embodiment of the present disclosure;
Fig.3 is an illustrative flow chart of a method for displaying a push message according to another embodiment of the present disclosure;
]Fig.4 is an illustrative flow chart of a method for displaying a push message according to yet another embodiment of the present disclosure;
Fig.5 is an illustrative flow chart of a method for displaying a push message according to an embodiment of the present disclosure;
Fig.6 is an illustrative flow chart of a method for displaying a push message according to an embodiment of the present disclosure;
Fig.7 is an illustrative block diagram of a device for displaying a push message according to the present disclosure;

The specific embodiments of the present disclosure have been illustrated in the above drawings and the detailed description thereof will be given hereinafter. These drawings and text description are only to illustrate the concept of the present disclosure with reference to the specific embodiments for those skilled in the art rather than limiting the scope conceived by the present disclosure in any manner.

### DESCRIPTION OF THE EMBODIMENTS

The embodiments of the present disclosure will be explained with reference to the appending drawings. It should be understood that the embodiments described herein is only used to illustrate and explain the present disclosure, but not to limit the present disclosure.

A user may open a networkable application in a terminal such as a mobile telephone, a tablet computer, and other device which is provided with a touch screen. When the user intends to refresh content displayed in the application, he/she may drag a current interface down by finger(s) to refresh, that is, to load a new content, which greatly facilitates the refresh operation of the user.

In the terminal nowadays, when such a drag-down-to-refresh manner is utilized, the current interface displayed in the terminal may move downwards along with the dragging of finger(s), so that the top side may become blank and may serve as a loading area for the new content. When the terminal finishes loading the new content requested by the user from a server, the new content may be displayed in the blank loading area. However, before the new content is completely loaded, the loading area may keep being blank.

The blank loading area described above is utilized in the present disclosure to display a push message for a user terminal.

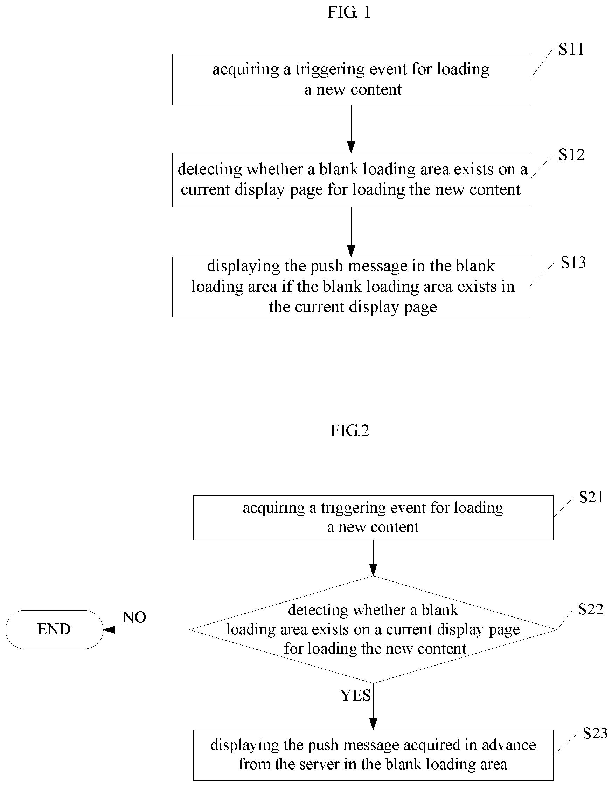

As shown in Fig.1, it illustrates a method for displaying a push message according to the present disclosure, comprising:
step S11: acquiring a triggering event for loading a new content;
step S12: detecting whether a blank loading area exists on a current display page for loading the new content;
step S13: if the blank loading area exists on the current display page, displaying the push message in the blank loading area.

The present disclosure can make use of the blank loading area on the display page, which appears when a terminal is loading a new content, to display the push message, so that display resources of the terminal may be sufficiently utilized, and a user can acquire various kinds of information without performing any tedious operation, thereby simplifying user operations. The push message may comprise a product introduction, and may also comprise a weather information or other content. Such a displaying manner can make best use of the limited display area of a device without affecting convenience and smooth of user operations, thereby better showing various contents for the user.

Hereinafter, the method for displaying a push message according to the present disclosure will be described in detail through other embodiments.

### A first embodiment

As shown in Fig.2, a case in which a push message is acquired in advance from a server is taken for example to illustrate the method for displaying a push message according to the present disclosure, the embodiment may comprise a step, which may be performed in advance, of recieving a push message sent from a server.

The step may be performed regularly or set to be performed only when a terminal is connected to a network.

Further, the push information sent initiatively by the server may be filtered according to a subscription message set by a user. For example, it is determined whether a message subscribed by a user exists in the push message, and if so, the message subscribed by the user in the push message may be stored as the push message acquired in advance.

When an event for loading a new content is triggered, the method for displaying a push message according to the present disclosure may comprise steps of:
step 21: acquiring a triggering event for loading a new content.

Currently, the triggering event for loading the new content may usually refer to an operation of dragging down/up the current display page, so as to load the new content, or may refer to clicking a button by a user to acquire the new content, or may also refer to loading the new content automatically while running a certain application.
Step S22: detecting whether a blank loading area exists on a current display page for loading the new content, and proceeding to step S23 if so.
Step S23: displaying the push message acquired in advance from a server in the blank loading area.

### A second embodiment

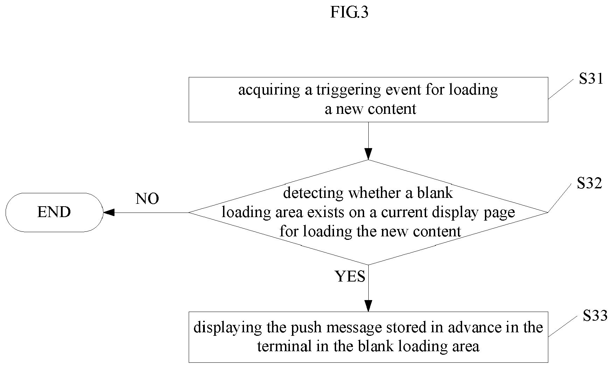

As shown in Fig.3, a case in which a push message is preset in a terminal is taken for example to illustrate the method for displaying a push message according to the present disclosure, and the embodiment may comprise a step, which may be performed in advance, of storing a push message in the terminal in advance according to user settings or terminal operator settings.

When an event for loading a new content is triggered, the method for displaying a push message according to the present disclosure may comprise steps of:
step S31: acquiring a triggering event for loading a new content;
step S32: detecting whether a blank loading area exists on a current display page for loading the new content, and proceeding to step S33 if so;
step S33: displaying in the blank loading area the push message stored in advance in the terminal.

As the method for displaying a push message provided in the present embodiment, it may be implemented without any communication with the server.

### A third embodiment

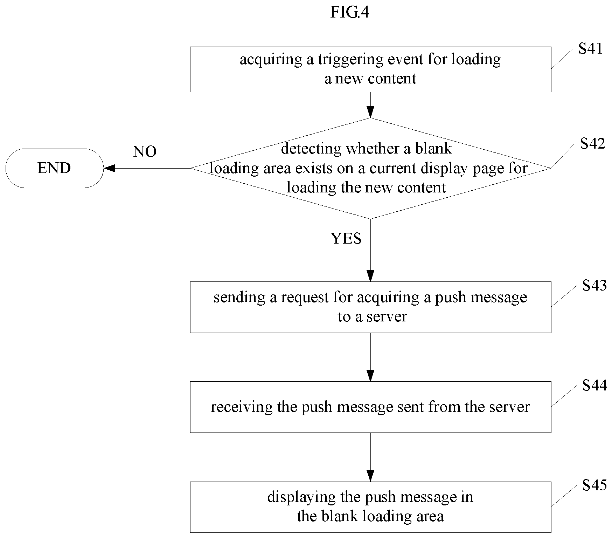

As shown in Fig.4, a case in which a terminal requests a server for a push message in real time is taken for example to illustate the method for displaying a push message according to the present disclosure, and the embodiment may comprise steps of:
step S41: acquiring a triggering event for loading a new content;
step S42: detecting whether a blank loading area exists on a current display page for loading the new content, and proceeding to step S43 if so;
step S43: sending a request for acquiring a push message to the server.

Alternatively, the request may comprise an message subscribed by a user, so that the server may send a corresponding push message according to the subscribed message; or, the server may send a corresponding push message according to a user information stored in advance in the server.

Step S44: receiving the push message sent from the server.

Step S45: displaying the push message in the blank loading area.

### A fourth embodiment

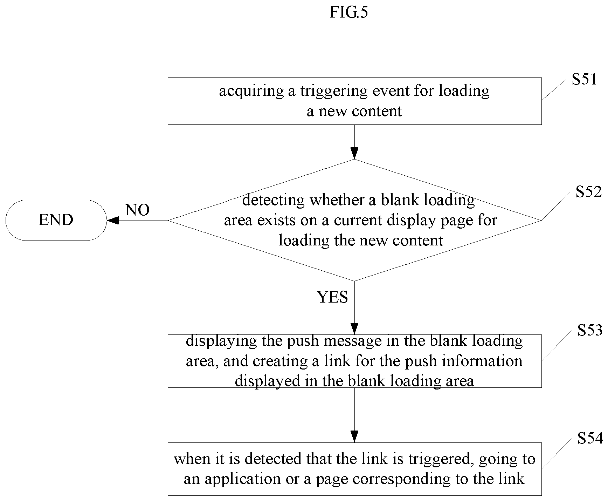

As shown in Fig.5, the present disclosure provides a method for displaying a push message, which can not only display the push message in a blank loading area but also create a link for the push message, comprising steps of:
step S51: acquiring a triggering event for loading a new content;
step S52: detecting whether a blank loading area exists on a current display page for loading the new content, proceeding to step S53 if so, and the process ends if not;
step S53: displaying a push information in the blank loading area, and creating a link for the push message displayed in the blank loading area;
step S54: when it is detected that the link is triggered, going to an application or a page corresponding to the link.

For example, when an update information for a certain application is contained in the push message, the information may be clicked directly to go to the corresponding applciation to perform update, which further facilitates the user.

### A fifth embodiment

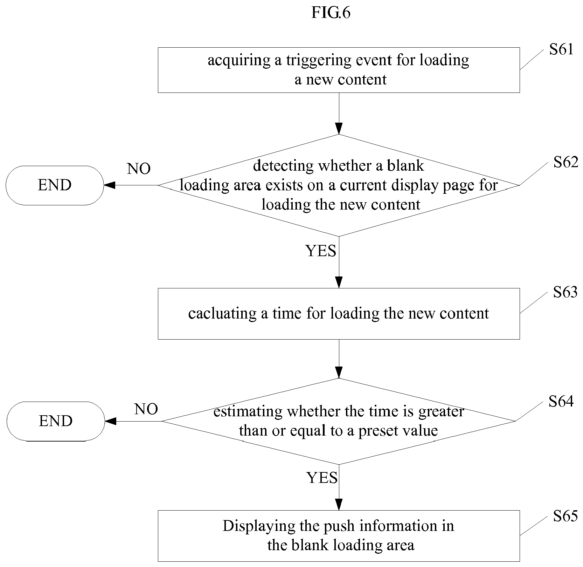

As shown in Fig.6, it illustrates a method for displaying a push message according to the present disclosure, which comprises a step of estimating a time for loading a new content on the basis of the above embodiments, in which the push message may be displayed only if a preset time is satisfied, so that the display of the push message may become more reasonable.

Step S61: acquiring a triggering event for loading a new content.

Step S62: detecting whether a blank loading area exists on a current display page for loading the new content, proceeding to step S63 if so, and the process ends if not.

Step S63: cacluating a time for loading the new content.

Herein, the time for loading the new content may be cacluated according to a network state and a size of the new content.

Step S64: estimating whether the time is greater than or equal to a preset value, and proceeding to step S65 if yes, otherwise the process ends.

Step S65: displaying the push message in the blank loading area.

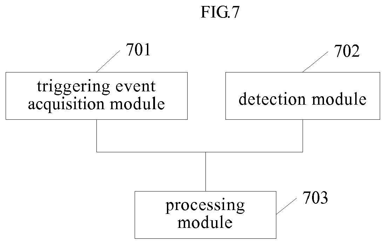

As shown in Fig.7, the present disclosure provides a device for displaying a push message, comprising:
a triggering event acquisition module 701 configured to acuquire a triggering event for loading a new content;
a detection module 702 configured to detect whether a blank loading area exists on a current display page for loading the new content after the triggering event acquisition module acquires the triggering event;
a processing module 703 configured to, if the blank loading area exists on the current display page, display the push message in the blank loading area.

For example, the processing module 703 may use a push message received in real time or regularly, which is sent from a server, as the push message to be displayed in the blank loading area, or may use a push message stored locally in advance as the push message to be displayed in the blank loading area.

The processing module 703 may be further configured to determine whether a message subscribed by a user exists in the push message sent from a server, and if so, to use the message subscribed by the user as the push message to be displayed in the blank loading area.

For example, if the blank loading area exists on the current display page, the processing module 703 may be further configured to send a request for acquiring a push message to a server, and receive the push message sent from the server.

For example, the processing module 703 may be configured to further establish a link for the push message in the blank loading area when the push message is displayed in the blank loading area.

The processing module 703 may be further configured to go to an application or a page correpsonding to the link when it is detected that the link is triggered.

For example, the processing module 703 may be further configured to cacluate a time for loading the new content, and perform an operation of displaying the push message in the blank loading area if the time is greater than or equal to a preset value.

Those skilled in the art should understand that the present disclosure may be implemented into a method, a system, or a computer program product. Accordingly, the present disclosure may be embodied in the form of hardware only, software only, or a combination thereof. Moreover, the present disclosure may be embodied in the form of a computer program product implemented on one or more computer-readable storage medium (including but not limited to a magnetic disk memory and an optic memory) containing computer-readable program codes.

The present disclosure is described with reference to flow charts and/or block diagrams of the method, device (system), and computer program product according to the present disclosure. It should be understood that each of the processes and/or blocks in the flow charts and/or the block diagrams, and any combination of the processes and/or blocks in the flow charts and/or the block diagrams may be embodied as computer program instructions. The computer program instructions may be provided to a processor of a general purpose computer, a dedicated computer, an embedded computer or other programmable data processing device so as to achieve a machine. Thus, a device for implementing those functions specified by one or more processes in the flow charts and/or one or more blocks in the block diagrams, may be achieved by instructions executed by the processor of the computer or other programmable data processing device.

The computer program instructions may also be stored in a computer-readable memory which may guide a computer or other programmable data processing device to operate in a specific manner, so that the instructions stored in the computer-readable memory may be embodied into a product including an instructions device, which may implement those functions specified by one or more processes in the flow charts and/or one or more blocks in the block diagrams.

The computer program instructions may also be loaded in a computer or other programmable data processing device, so that a series of operations may be performed in the computer or other programmable data-processing device to achieve processes implemented by the computer. Thus, the instructions executed in the computer or other programmable data-processing device may provide steps for implementing those functions specified by one or more processes in the flow charts and/or one or more blocks in the block diagrams.

## Claims

1. A method for displaying a push message in a blank loading area of a current displayed page, the blank loading area serving for loading a new content, comprising the steps of:
acquiring (S11) a triggering event for loading the new content;
detecting (S12) whether a blank loading area is displayed on the current displayed page subsequently to the acquiring of the triggering event;
if the blank loading area is displayed, displaying (S13) the push message in the blank loading area of the current displayed page before the new content is completely loaded; and
displaying the new content in the blank loading area of the current displayed page after the new content is completely loaded.

2. The method of claim 1, wherein, the push message comprises:
a push message received in real time or regularly, which is sent from a server (S23); or
a push message stored locally in advance (S33).

3. The method of claim 2, wherein, the method further comprises:
determining whether a message subscribed by a user exists in the push message sent from the server, and, if so, using the message subscribed by the user as the push message to be displayed in the blank loading area.

4. The method of claim 1, wherein, if the blank loading area exists in the current display page, the method further comprises:
sending (S43) a request for acquiring a push message to a server; and
receiving (S44) the push message sent from the server.

5. The method of claim 1, wherein, when the push message is displayed in the blank loading area, the method further comprises establishing a link for the push message in the blank loading area (S53).

6. The method of claim 1, wherein, prior to the displaying the push message in the blank loading area, the method further comprises:
calculating (S63) a time for loading the new content; and
performing the displaying (S65) the push message in the blank loading area if the time is greater than or equal to a preset value (S64).

7. A device for displaying a push message in a blank loading area of a current displayed page, the blank loading area serving for loading a new content, comprising:
a triggering event acquisition module (701) configured to acquire a triggering event for loading the new content;a detection module (702) configured to detect whether a blank loading area is displayed on a current displayed page subsequent to the triggering event acquisition module acquires the triggering event; and
a processing module (703) configured to, if the blank loading area is displayed,
display the push message in the blank loading area of the current displayed page before the new content is completely loaded; and
display the new content in the blank loading area of the current displayed page after the new content is completely loaded.

8. The device of claim 7, wherein, the processing module (703) is configured to use a push message received in real time or regularly, which is sent from a server (S23), as the push message; or use a push message stored locally in advance as the push message (S33).

9. The device of claim 8, wherein, the processing module (703) is further configured to determine whether a message subscribed by a user exists in the push message sent from the server, and if so, use the message subscribed by the user as the push message to be displayed in the blank loading area.

10. The device of claim 7, wherein, the processing module (703) is further configured to, if the blank loading area exists on the current display page, send (S43) a request for acquiring a push message to a server, and receive (S44) the push message sent from the server.

11. The device of claim 7, wherein, the processing module (703) is further configured to, when the push message is displayed in the blank loading area, establish a link for the push message in the blank loading area (S53).

12. The device of claim 11, wherein, the processing module (703) is further configured to go to an application or a page corresponding to the link when the link is detected as being triggered (S54).

13. The device of claim 7, wherein, the processing module (703) is further configured to calculate (S63) a time for loading the new content, and, if the time is greater than or equal to a preset value, perform an operation of the displaying the push message in the blank loading area.

14. A computer program, which when executing on a processor, performs the method according to any one of claims 1 to 6.

15. A computer usable medium, comprising computer-readable program means for causing the computer to implement the method according to any one of claims 1 to 6.

## Patentansprüche

1. Verfahren zum Anzeigen einer Push-Nachricht in einem freien Ladebereich einer aktuellen angezeigten Seite, wobei der freie Ladebereich zum Laden eines neuen Inhalts dient, umfassend folgende Schritte:
Erfassen (S11) eines Auslöseereignisses für das Laden des neuen Inhalts;
Detektieren (S12), ob ein freier Ladebereich auf der aktuellen angezeigten Seite nach dem Erfassen des Auslöseereignisses angezeigt wird;
falls der freie Ladebereich angezeigt wird, Anzeigen (S13) der Push-Nachricht in dem freien Ladebereich der aktuellen angezeigten Seite, bevor der neue Inhalt vollständig geladen wird; und
Anzeigen des neuen Inhalts in dem freien Ladebereich der aktuellen angezeigten Seite, nachdem der neue Inhalt vollständig geladen wurde.

2. Verfahren nach Anspruch 1, wobei die Push-Nachricht umfasst:
eine Push-Nachricht, die in Echtzeit oder regelmäßig empfangen wird und von einem Server gesendet wird (S23); oder
eine Push-Nachricht, die lokal im Voraus gespeichert wird (S33).

3. Verfahren nach Anspruch 2, wobei das Verfahren ferner Folgendes umfasst:
Bestimmen, ob eine Nachricht, die ein Benutzer abonniert hat, in der Push-Nachricht existiert, die von dem Server gesendet wird, und wenn ja, Verwenden der Nachricht, die der Benutzer abonniert hat, als Push-Nachricht, die in dem freien Ladebereich anzuzeigen ist.

4. Verfahren nach Anspruch 1, wobei das Verfahren, falls der freie Ladebereich auf der aktuellen Anzeigeseite existiert, ferner Folgendes umfasst:
Senden (S43) einer Anfrage zum Erfassen einer Push-Nachricht an einen Server; und
Empfangen (S44) der Push-Nachricht, die von dem Server gesendet wird.

5. Verfahren nach Anspruch 1, wobei das Verfahren, wenn die Push-Nachricht in dem freien Ladebereich angezeigt wird, ferner das Einrichten eines Links für die Push-Nachricht in dem freien Ladebereich umfasst (S53).

6. Verfahren nach Anspruch 1, wobei das Verfahren vor dem Anzeigen der Push-Nachricht in dem freien Ladebereich ferner Folgendes umfasst:
Berechnen (S63) einer Zeit zum Laden des neuen Inhalts; und
Ausführen des Anzeigens (S65) der Push-Nachricht in dem freien Ladebereich, falls die Zeit größer oder gleich einem voreingestellten Wert ist (S53).

7. Vorrichtung zum Anzeigen einer Push-Nachricht in einem freien Ladebereich einer aktuellen angezeigten Seite, wobei der freie Ladebereich zum Laden eines neuen Inhalts dient, umfassend:
ein Modul (701) zum Erfassen eines Auslöseereignisses, das konfiguriert ist, um ein Auslöseereignis für das Laden des neuen Inhalts zu erfassen;
ein Detektionsmodul (702), das konfiguriert ist, um zu detektieren, ob ein freier Ladebereich auf einer aktuellen angezeigten Seite angezeigt wird, nachdem das Modul zum Erfassen eines Auslöseereignisses das Auslöseereignis erfasst hat; und
ein Verarbeitungsmodul (703), das konfiguriert ist, falls der freie Ladebereich angezeigt wird, zum
Anzeigen der Push-Nachricht in dem freien Ladebereich der aktuellen angezeigten Seite, bevor der neue Inhalt vollständig geladen wird; und
Anzeigen des neuen Inhalts in dem freien Ladebereich der aktuellen angezeigten Seite, nachdem der neue Inhalt vollständig geladen wurde.

8. Vorrichtung nach Anspruch 7, wobei das Verarbeitungsmodul (703) konfiguriert ist, um eine Push-Nachricht, die in Echtzeit oder regelmäßig empfangen wird und von einem Server (S23) gesendet wird, als Push-Nachricht zu verwenden; oder um eine Push-Nachricht, die lokal im Voraus gespeichert wird, als Push-Nachricht (S33) zu verwenden.

9. Vorrichtung nach Anspruch 8, wobei das Verarbeitungsmodul (703) ferner konfiguriert ist, um zu bestimmen, ob eine Nachricht, die der Benutzer abonniert hat, in der Push-Nachricht, die von dem Server gesendet wird, existiert, und wenn ja, um die Nachricht, die der Benutzer abonniert hat, als Push-Nachricht zu verwenden, die in dem freien Ladebereich anzuzeigen ist.

10. Vorrichtung nach Anspruch 7, wobei das Verarbeitungsmodul (703) ferner konfiguriert ist, falls der freie Ladebereich auf der aktuellen angezeigten Seite existiert, um eine Anfrage zum Erfassen einer Push-Nachricht an einen Server zu senden (S43) und die Push-Nachricht, die von dem Server gesendet wird, zu empfangen (S44).

11. Vorrichtung nach Anspruch 7, wobei das Verarbeitungsmodul (703) ferner konfiguriert ist, wenn die Push-Nachricht in dem freien Ladebereich angezeigt wird, um ein Link für die Push-Nachricht in dem freien Ladebereich (S53) einzurichten.

12. Vorrichtung nach Anspruch 11, wobei, das Verarbeitungsmodul (703) ferner konfiguriert ist, um sich zu einer Anwendung oder auf eine Seite, die dem Link entspricht, zu begeben, wenn detektiert wird, dass der Link ausgelöst wird (S54).

13. Vorrichtung nach Anspruch 7, wobei das Verarbeitungsmodul (703) ferner konfiguriert ist, um eine Zeit zum Laden des neuen Inhalts zu berechnen (S63), und falls die Zeit größer oder gleich einem voreingestellten Wert ist, um einen Vorgang des Anzeigens der Push-Nachricht in dem freien Ladebereich auszuführen.

14. Computerprogramm, das, wenn es auf einem Prozessor abläuft, das Verfahren nach einem der Ansprüche 1 bis 6 ausführt.

15. Computerverwendbares Medium, das computerlesbare Programmmittel umfasst, um zu bewirken, dass der Computer das Verfahren nach einem der Ansprüche 1 bis 6 umsetzt.

## Revendications

1. Procédé pour afficher un message de pousser dans une zone de chargement vierge d'une page affichée courante, la zone de chargement vierge servant à charger un nouveau contenu, comprenant les étapes suivantes :
acquérir (S11) un événement de déclenchement pour charger le nouveau contenu ;
détecter (S12) si une zone de chargement vierge est ou non affichée sur la page affichée courante après l'acquisition de l'événement de déclenchement ;
si la zone de chargement vierge est affichée, afficher (S13) le message de pousser dans la zone de chargement vierge de la page affichée courante avant que le nouveau contenu ne soit complètement chargé ; et
afficher le nouveau contenu dans la zone de chargement vierge de la page affichée courante après que le nouveau contenu est complètement chargé.

2. Procédé selon la revendication 1, dans lequel le message de pousser comprend :
un message de pousser reçu en temps réel ou de manière régulière, qui est envoyé à partir d'un serveur (S23) ; ou
un message de pousser stocké localement à l'avance (S33).

3. Procédé selon la revendication 2, le procédé comprenant en outre :
déterminer si un message auquel s'est abonné un utilisateur existe ou non dans le message de pousser envoyé à partir du serveur, et, si tel est le cas, utiliser le message auquel s'est abonné l'utilisateur en tant que message de pousser à afficher dans la zone de chargement vierge.

4. Procédé selon la revendication 1, dans lequel, si la zone de chargement vierge existe dans la page affichée courante, le procédé comprend en outre :
envoyer (S43) une requête pour acquérir un message de pousser à un serveur ; et
recevoir (S44) le message de pousser envoyé à partir du serveur.

5. Procédé selon la revendication 1, dans lequel, lorsque le message de pousser est affiché dans la zone de chargement vierge, le procédé comprend en outre l'établissement d'un lien pour le message de pousser dans la zone de chargement vierge (S53).

6. Procédé selon la revendication 1, dans lequel, avant l'affichage du message de pousser dans la zone de chargement vierge, le procédé comprend en outre :
calculer (S63) un temps pour le chargement du nouveau contenu ; et
réaliser l'affichage (S65) du message de pousser dans la zone de chargement vierge si le temps est supérieur ou égal à une valeur préréglée (S64).

7. Dispositif pour afficher un message de pousser dans une zone de chargement vierge d'une page affichée courante, la zone de chargement vierge servant à charger un nouveau contenu, comprenant :
un module d'acquisition d'événement de déclenchement (701) configuré pour acquérir un événement de déclenchement pour charger le nouveau contenu ;
un module de détection (702) configuré pour détecter si une zone de chargement vierge est ou non affichée sur une page affichée courante après que le module d'acquisition d'événement de déclenchement acquiert l'événement de déclenchement ; et
un module de traitement (703) configuré pour, si la zone de chargement vierge est affichée, afficher le message de pousser dans la zone de chargement vierge de la page affichée courante avant que le nouveau contenu ne soit complètement chargé, et afficher le nouveau contenu dans la zone de chargement vierge de la page affichée courante après que le nouveau contenu est complètement chargé.

8. Dispositif selon la revendication 7, dans lequel le module de traitement (703) est configuré pour utiliser un message de pousser reçu en temps réel ou de manière régulière, qui est envoyé à partir d'un serveur (S23), en tant que message de pousser ; ou utiliser un message de pousser stocké localement à l'avance en tant que message de pousser (S33).

9. Dispositif selon la revendication 8, dans lequel le module de traitement (703) est en outre configuré pour déterminer si un message auquel s'est abonné un utilisateur existe ou non dans le message de pousser envoyé à partir du serveur, et, si tel est le cas, utiliser le message auquel s'est abonné l'utilisateur en tant que message de pousser à afficher dans la zone de chargement vierge.

10. Dispositif selon la revendication 7, dans lequel le module de traitement (703) est en outre configuré pour, si la zone de chargement vierge existe sur la page affichée courante, envoyer (S43) une requête pour acquérir un message de pousser à un serveur, et recevoir (S44) le message de pousser envoyé à partir du serveur.

11. Dispositif selon la revendication 7, dans lequel le module de traitement (703) est en outre configuré pour, lorsque le message de pousser est affiché dans la zone de chargement vierge, établir un lien pour le message de pousser dans la zone de chargement vierge (S53).

12. Dispositif selon la revendication 11, dans lequel le module de traitement (703) est en outre configuré pour aller sur une application ou une page correspondant au lien lorsque le lien est détecté comme étant déclenché (S54).

13. Dispositif selon la revendication 7, dans lequel le module de traitement (703) est en outre configuré pour calculer (S63) un temps pour charger le nouveau contenu, et, si le temps est supérieur ou égal à une valeur préréglée, réaliser une opération de l'affichage du message de pousser dans la zone de chargement vierge.

14. Programme d'ordinateur, qui, lorsqu'il est exécuté sur un processeur, réalise le procédé selon l'une quelconque des revendications 1 à 6.

15. Support pouvant être utilisé par ordinateur, comprenant des moyens de programme lisible par ordinateur pour amener l'ordinateur à mettre en oeuvre le procédé selon l'une quelconque des revendications 1 à 6.
